# EUROPÄISCHE PATENTSCHRIFT

(11) **EP 2 179 814 B1**
(45) Veröffentlichungstag und Bekanntmachung des Hinweises auf die Patenterteilung: **28.08.2013**
(21) Anmeldenummer: 09012542.8
(22) Anmeldetag: 05.10.2009
(51) Int. Cl.: B23K 10/00, B23K 26/38, B23K 26/14, F23D 14/54, H05H 1/34

(54) **Schneiddüse für Laserschneiden und/oder Plasmaschneiden aus zwei verbundenen Teilen**
Laser and/or plasma cutting nozzle in two connected parts
Buse pour coupage par laser et/ou plasma en deux parties connectées

(30) Priorität: 22.10.2008 DE 102008052656
(43) Veröffentlichungstag der Anmeldung: 28.04.2010
(73) Patentinhaber: Czaban, Marco, 78658 Zimmern (DE)
(72) Erfinder: Czaban, Marco, 78658 Zimmern (DE)
(74) Vertreter: Mussgnug, Bernd

(56) Entgegenhaltungen:
- EP-A1- 1 500 459
- WO-A1-2007/060008
- DE-U1-202004 011 430

## Beschreibung

Die Erfindung betrifft eine Schneiddüse für das Laserschneiden und/oder das Plasmaschneiden gemäß dem Oberbegriff des Patentanspruchs 1 (siehe, z.B., WO 2007/060008 A1).

Beim Laserschneiden wird das zu trennende Material, z. B. ein Blech, mittels eines Laserstrahls geschmolzen, verbrannt oder sublimiert. Der Laserstrahl wird in einer Laserstrahlquelle erzeugt, über eine Strahlführung zu einer Fokussieroptik geführt und tritt dann fokussiert durch die Schneiddüse aus, um entlang der Schnittfuge auf das zu trennende Material aufzutreffen. Durch die Schneiddüse wird im Allgemeinen auch ein Prozessgas auf die Bearbeitungsstelle gelenkt. Die Schneiddüse besteht in der Regel aus einem Metall mit hoher Leitfähigkeit, d. h. sowohl hoher Wärmeleitfähigkeit als auch hoher elektrischer Leitfähigkeit. Dadurch wird die Reflexion des Laserstrahls in dem Düsenkanal verbessert und eine zu starke Erwärmung der Schneiddüse verhindert. In der Regel wird die Schneiddüse aus Kupfer gefertigt, wobei auch ein Verchromen der aus Kupfer bestehenden Schneiddüse bekannt ist.

Beim Plasmaschneiden wird ein Plasma, d. h. ein durch Aufheizen ionisiertes elektrisch leitfähiges Gas erzeugt und eine elektrische Entladung durch einen Plasmabogen zwischen einer Kathode und dem zu trennenden Werkstück erzeugt. Der Plasmabogen tritt durch die Schneiddüse aus und wird durch diese auf die Trennfuge fokussiert. Zum Zünden des Plasmabogens wird eine Zündspannung zwischen die Schneiddüse und die Kathode angelegt. Sobald der Plasmabogen gezündet ist, wird er durch ein Prozessgas aus der Schneiddüse hinausgedrängt, um mit dem zu bearbeitenden Material in Berührung zu kommen. Dann wird die Schneiddüse elektrisch neutral geschaltet, so dass der Plasmabogen zwischen der Kathode und dem zu bearbeitenden Werkstück als Anode brennt. Auch hier wird die Schneiddüse aus einem Metall hoher elektrischer und thermischer Leitfähigkeit, insbesondere Kupfer, hergestellt.

Die bekannten Schneiddüsen weisen einen achsmittig durchgehenden Düsenkanal auf, durch welchen der Laserstrahl bzw. der Plasmabogen durchtritt und gegebenenfalls ein Prozessgas auf die Bearbeitungsstelle gelenkt wird. An der Austrittsseite der Schneiddüse verbreitert sich üblicherweise deren Durchmesser zu einem Schutzflansch. Dieser Schutzflansch dient dazu, die Funktionsteile der Fokussieroptik beim Laserschneiden bzw. der Plasmaerzeugung beim Plasmaschneiden abzudecken und insbesondere vor Metallspritzern zu schützen. Die bekannten Schneiddüsen sind einstückig aus dem Vollmaterial des Kupfers gedrehte Feindrehteile. Aufgrund der Ausbildung des Schutzflansches mit verbreitertem Durchmesser ergibt sich beim Drehen der Schneiddüse ein großer Materialabfall. Da die Schneiddüsen Verschleißteile sind, die nur eine kurze Standzeit haben und häufig ersetzt werden müssen, bedeutet dieser Materialabfall bei der Herstellung der Schneiddüsen aus dem teuren Werkstoff Kupfer einen erheblichen Kostenfaktor.

Der Erfindung liegt die Aufgabe zugrunde, die Schneiddüsen für das Laserschneiden und das Plasmaschneiden kostengünstiger herzustellen.

Diese Aufgabe wird erfindungsgemäß gelöst durch eine Schneiddüse mit den Merkmalen des Patentanspruchs 1.

Vorteilhafte Ausführungen der Erfindung sind in den Unteransprüchen angegeben.

Der wesentliche Gedanke der Erfindung besteht darin, die Schneiddüse aus zwei Teilen herzustellen, nämlich einem Kernteil und einem Flanschteil. Der Kernteil umschließt den Düsenkanal über dessen gesamte Länge koaxial und bildet somit die Wandung des Düsenkanals. Der Kernteil wird aus einem Metall hoher thermischer und elektrischer Leitfähigkeit gedreht, vorzugsweise aus Kupfer. Der Kernteil weist im Wesentlichen eine zylindrische Form auf, deren Durchmesser nur so groß gewählt werden muss, dass die erforderliche Wandstärke für den Düsenkanal erhalten wird. Der verbreiterte Schutzflansch mit großem Durchmesser wird dagegen durch den separaten Flanschteil gebildet, der aus einem kostengünstigeren Material gefertigt werden kann. Dieses Material kann ein Metall, z. B. Stahl oder auch Kunststoff sein. Der Flanschteil wird koaxial auf den Kernteil aufgesetzt und durch eine Fügeverbindung fest mit dem Kernteil verbunden. Der Kernteil kann somit aus einem Stabmaterial des hochwertigen Metalls, z. B. Kupfer, gedreht werden, ohne dass der Durchmesser des Rohmaterials wesentlich reduziert werden muss. Der Materialabfall beim Drehen des Kernteils ist somit gegenüber dem herkömmlichen Drehen der gesamten Schneiddüse aus einem Stück erheblich reduziert. Dadurch ergibt sich eine Materialkostenreduzierung, die insbesondere bei den großen Stückzahlen, in denen die Schneiddüse als Verschleißteil benötigt wird, den Aufwand für die getrennte Fertigung der zwei Teile und deren Zusammenfügen deutlich überwiegt. Es ergibt sich somit der überraschende Effekt, dass trotz des höheren Herstellungsaufwandes der Schneiddüse erfindungsgemäß die Schneiddüse kostengünstiger hergestellt werden kann.

Der Flanschteil wird vorzugsweise aus Stahl hergestellt, das sich durch hohe mechanische Festigkeit und gute Bearbeitbarkeit für diesen Zweck auszeichnet. Insbesondere wird Edelstahl verwendet, der auch gegen Korrosion durch Metallspritzer unempfindlich ist.

Um den Kernteil und den Flanschteil zuverlässig und kostengünstig zusammenzufügen wird vorzugsweise eine Presspassung verwendet. Die Passfläche kann dabei ein koaxialer gerader Kreiszylinder sein oder ein koaxialer gerader Kreiskegel. Auch andere Fügetechniken sind möglich, z. B. Klebeverbindungen oder Schraubverbindungen.

Im Folgenden wird die Erfindung anhand eines in der Zeichnung dargestellten Ausführungsbeispiels näher erläutert. Es zeigen:
- Figur 1: einen Axialschnitt durch eine Schneiddüse gemäß der Erfindung und
- Figur 2: eine axiale Stirnansicht der Schneiddüse.

Das Ausführungsbeispiel zeigt eine Schneiddüse für das Laserschneiden.

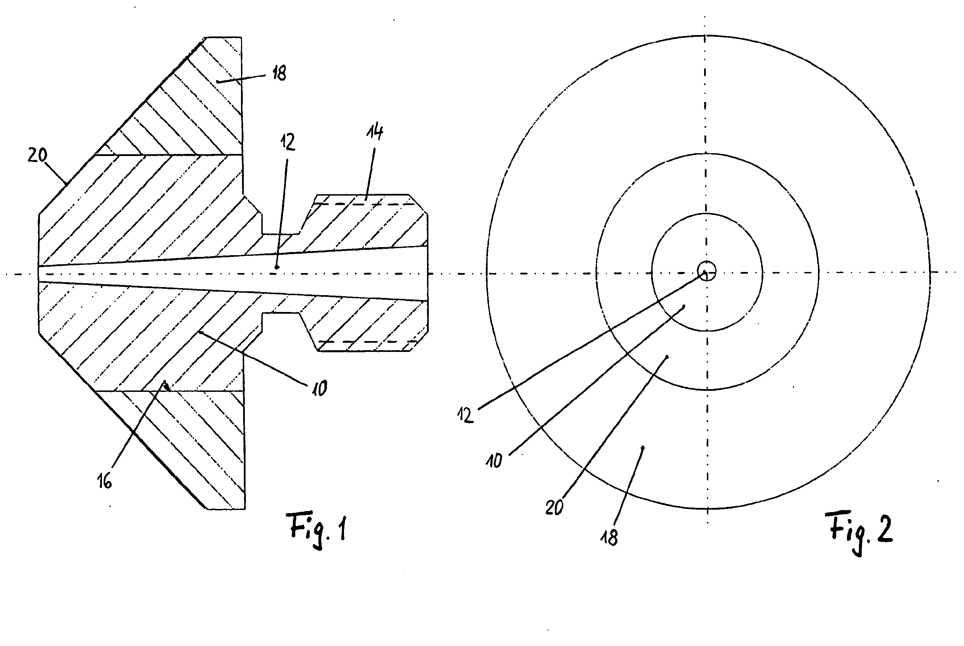

Die Schneiddüse weist einen Kernteil 10 auf, der aus einem Stangenmaterial aus Kupfer gedreht wird. Durch den Kernteil 10 führt axial mittig ein Düsenkanal 12, der sich von dem hinteren, in Figur 1 rechten Ende gegen das vordere Austrittsende konisch verengt, um den durchtretenden Laserstrahl auf die Bearbeitungsstelle zu fokussieren. In dem axial hinteren Abschnitt des Kernteils 10 ist dessen Durchmesser reduziert und mit einem Außengewinde 14 versehen, mit welchem die Schneiddüse in einen nicht gezeigten Düsenhalter auswechselbar eingeschraubt werden kann.

Der axial vordere Abschnitt des Kernteils 10 weist einen kreiszylindrischen Außenumfang 16 auf, dessen Querschnitt im Wesentlichem dem Querschnitt des Ausgangsstangenmaterials entspricht, so dass der Kernteil 10 insgesamt mit einem sehr geringen Materialabfall aus dem Stangenmaterial gedreht werden kann.

Auf den Außenumfang 16 des vorderen Abschnitts des Kernteils 10 ist in Passpressung ein Flanschteil 18 aufgepresst, welches aus Edelstahl gedreht ist. Der Flanschteil 18 schließt an seiner hinteren axialen Stirnfläche flächenbündig mit der hinteren Stirnfläche des vorderen Abschnitts des Kernteils 10 ab, so dass sich eine durchgehende Kreisringfläche ergibt, mit welcher die Schneiddüse beim Einschrauben in den Düsenhalter an dessen vorderer Stirnfläche dicht anliegt. Die vordere Stirnfläche des Flanschteils 18 ist, gemäß der Erfindung, konisch abgeschrägt und geht stufenlos in einen konisch abgeschrägten Rand 20 des vorderen Abschnittes des Kernteils 10 über. Der Flanschteil 18 umschließt somit den Kernteil 10 in dessen vorderem Bereich koaxial und bildet mit diesem zusammen den nach vorn konisch ausgebildeten vorderen Abschnitt der Schneiddüse.

Es ist für den Fachmann ohne weiteres ersichtlich, dass die Erfindung nicht auf diese spezielle Form der Schneiddüse für das Laserschneiden beschränkt ist. Die Herstellung aus zwei Teilen, einem inneren Kernteil aus einem Metall hoher Leitfähigkeit, z. B. aus Kupfer, der den Düsenkanal umschließt und einem äußeren Flanschteil aus einem preisgünstigeren Material kann bei allen verschiedenen Formen der Schneiddüsen für das Laserschneiden und das Plasmaschneiden verwendet werden.

### Bezugszeichenliste

- 10: Kernteil
- 12: Düsenkanal
- 14: Außengewinde
- 16: Außenumfang
- 18: Flanschteil
- 20: konischer Rand

## Patentansprüche

1. Schneiddüse für das Laserschneiden und/oder das Plasmaschneiden mit einem achsmittig durchgehenden Düsenkanal (12) und einem an der Austrittsseite angeordneten im Durchmesser verbreiterten Schutzflansch, wobei
die Schneiddüse aus zwei Teilen hergestellt ist, nämlich einem den Düsenkanal (12) über dessen gesamte Länge koaxial umschließenden Kernteil (10) und einem den Schutzflansch bildenden Flanschteil (18), wobei der Flanschteil (18) den Kernteil (10) umschließt, wobei der Flanschteil (18) und der Kernteil (10) durch eine Fügeverbindung fest miteinander verbunden sind, wobei der Kernteil (10) aus einem ersten Metall hoher elektrischer und thermischer Leitfähigkeit besteht und wobei der Flanschteil (18) aus einem von dem ersten Metall verschiedenen zweiten Material hoher mechanischer Festigkeit besteht, **dadurch gekennzeichnet, dass** eine vordere Stirnfläche des Flanschteils (18) konisch abgeschrägt und stufenlos in einen konisch abgeschrägten Rand (20) eines vorderen Abschnittes des Kernteils (10) übergeht, sodass der Flanschteil (18) mit dem Kernteil (10) einen nach vorn konisch ausgebildeten vorderen Abschnitt der Schneiddüse bildet.

2. Schneiddüse nach Anspruch 1,
**dadurch gekennzeichnet, dass** das erste Metall Kupfer ist.

3. Schneiddüse nach Anspruch 1 oder 2,
**dadurch gekennzeichnet, dass** das zweite Material ein Metall ist.

4. Schneiddüse nach Anspruch 3,
**dadurch gekennzeichnet, dass** das zweite Metall Stahl, insbesondere Edelstahl ist.

5. Schneiddüse nach Anspruch 1 oder 2,
**dadurch gekennzeichnet, dass** das zweite Material ein Kunststoff ist.

6. Schneiddüse nach einem der vorhergehenden Ansprüche, **dadurch gekennzeichnet, dass** die Fügeverbindung eine Presspassung ist.

7. Schneiddüse nach Anspruch 6,
**dadurch gekennzeichnet, dass** die Passfläche (16) der Presspassung ein koaxialer gerader Kreiszylinder ist.

8. Schneiddüse nach Anspruch 6,
**dadurch gekennzeichnet, dass** die Passfläche der Presspassung ein koaxialer gerader Kreiskegel ist.

9. Schneiddüse nach einem der Ansprüche 1 bis 5,
**dadurch gekennzeichnet, dass** die Fügeverbindung eine Klebeverbindung ist.

10. Schneiddüse nach einem der Ansprüche 1 bis 5,
**dadurch gekennzeichnet, dass** die Fügeverbindung eine Schraubverbindung ist.

## Claims

1. Cutting nozzle for laser cutting and/or plasma cutting having a truly axially continuous nozzle channel (12) and a protective flange of widened diameter arranged on the exit side, wherein the cutting nozzle is produced from two parts, namely a core part (10) which surrounds the nozzle channel (12) coaxially over the entire length thereof and a flange part (18) forming the protective flange, wherein the flange part (18) surrounds the core part (10), wherein the flange part (18) and the core part (10) are firmly connected to one another by a joining connection, wherein the core part (10) is made of a first metal of high electrical and thermal conductivity and wherein the flange part (18) is made of a second material of high mechanical strength which differs from the first metal,
**characterised in that** a front face of the flange part (18) transforms continuously in a conically slanting manner into a conically slanted edge (20) of a front section of the core part (10), so that the flange part (18) forms with the core part (10) a cutting nozzle section which is constructed conically at the front.

2. Cutting nozzle according to claim 1, **characterised in that** the first metal is copper.

3. Cutting nozzle according to claim 1 or 2, **characterised in that** the second material is a metal.

4. Cutting nozzle according to claim 3, **characterised in that** the second metal is steel, in particular high-grade steel.

5. Cutting nozzle according to claim 1 or 2, **characterised in that** the second material is a plastic.

6. Cutting nozzle according to one of the preceding claims, **characterised in that** the joining connection is a press fit.

7. Cutting nozzle according to claim 6, **characterised in that** the fitting surface (16) of the press fit is a coaxial straight circular cylinder.

8. Cutting nozzle according to claim 6, **characterised in that** the fitting surface of the press fit is a coaxial straight circular cone.

9. Cutting nozzle according to one of claims 1 to 5, **characterised in that** the joining connection is an adhesive connection.

10. Cutting nozzle according to one of claims 1 to 5, **characterised in that** the joining connection is a screw connection.

## Revendications

1. Tête de coupe destinée à la découpe par laser et/ou à la découpe au plasma comportant un canal de buse traversant médian (12) et une collerette de protection ayant un diamètre élargi montée côté sortie, cette tête de coupe étant réalisée en deux parties, à savoir une partie de noyau (10) entourant co-axialement le canal de buse (12) sur la totalité de sa longueur et une partie de collerette (18) formant la collerette de protection, la partie de collerette (18) entourant la partie de noyau (10), la partie de collerette (18) et la partie de noyau (10) étant reliées solidairement l'une à l'autre par une liaison par une jointure, la partie de noyau (10) étant réalisée en un premier métal de conductivité électrique et thermique élevées et la partie de collerette (18) étant réalisée en un second matériau différent du premier métal ayant une résistance mécanique plus élevée,
**caractérisée en ce que**
la surface frontale avant de l'élément de collerette (18) est inclinée coniquement et se prolonge de manière continue par un bord incliné coniquement (20) d'un tronçon avant de la partie de noyau (10) de sorte que la partie de collerette (18) forme avec la partie de noyau (10) le tronçon avant réalisé obliquement coniquement vers l'avant de la tête de coupe.

2. Tête de coupe conforme à la revendication 1,
**caractérisée en ce que**
le premier métal est du cuivre.

3. Tête de coupe conforme à la revendication 1 ou 2,
**caractérisée en ce que**
le second matériau est un métal.

4. Tête de coupe conforme à la revendication 3,
**caractérisée en ce que**
le second métal est de l'acier, en particulier un acier spécial.

5. Tête de coupe conforme à la revendication 1 ou 2,
**caractérisée en ce que**
le second matériau est une matière plastique.

6. Tête de coupe conforme à l'une des revendications précédentes, **caractérisée en ce que**
la jointure est un ajustage serré.

7. Tête de coupe conforme à la revendication 6,
**caractérisée en ce que**
la surface d'ajustage (16) de l'ajustage serré est un cylindre de révolution droit co-axial.

8. Tête de coupe conforme à la revendication 6,
**caractérisée en ce que**
la surface d'ajustage de l'ajustage serré est un cône de révolution droit co-axial.

9. Tête de coupe conforme à l'une des revendications 1 à 5, **caractérisée en ce que**
l'ajustage serré est une liaison par collage.

10. Tête de coupe conforme à l'une des revendications 1 à 5, **caractérisée en ce que**
l'ajustage serré est une liaison par vissage.
